# EUROPÄISCHE PATENTANMELDUNG

(11) **EP 3 945 647 A1**
(43) Veröffentlichungstag der Anmeldung: **02.02.2022**
(21) Anmeldenummer: 20201360.3
(22) Anmeldetag: 12.10.2020
(51) Int. Cl.: H02B 1/32, H02B 1/052

(54) **GERÄTETRÄGER UND GERÄTETRÄGERMODUL FÜR EINEN STROMKREISVERTEILER**

(30) Priorität: 30.07.2020 DE 202020104422 U
(71) Anmelder: Mangelberger, Philip, 91126 Schwabach (DE)
(72) Erfinder: Mangelberger, Philip, 91126 Schwabach (DE)
(74) Vertreter: Dr. Gassner & Partner mbB

(57) **Zusammenfassung**

Geräteträger (1), der für den Einbau in ein Gehäuse eines Stromkreisverteilers vorgesehen ist, mit zwei zueinander beabstandeten, in dem Gehäuse befestigbaren Verbindungsstegen (3, 4) und einer sich orthogonal dazu erstreckenden Profilschiene (2) zum Befestigen elektrischer Komponenten, wobei jeder Verbindungssteg (3, 4) einen ersten Abschnitt (5) aufweist, der von der Profilschiene (2) in eine Richtung absteht, sowie einen zweiten Abschnitt (6), der von der Profilschiene (2) in die entgegengesetzte Richtung absteht, wobei auf der Oberseite der ersten Abschnitte (5) erste Rasteinrichtungen und auf der Unterseite der zweiten Abschnitte (6) zweite Rasteinrichtungen angeordnet sind, wobei die ersten Rasteinrichtungen und die zweiten Rasteinrichtungen miteinander verrastbar sind.

## Beschreibung

Die Erfindung betrifft einen Geräteträger, der für den Einbau in ein Gehäuse eines Stromkreisverteilers vorgesehen ist, mit zwei zueinander beabstandeten, in dem Gehäuse befestigbaren Verbindungsstegen und einer sich orthogonal dazu erstreckenden Profilschiene zum Befestigen elektrischer oder nicht elektrischer Komponenten.

Derartige Geräteträger werden zumeist von den Herstellern von Stromkreisverteilern in das Gehäuse des Stromkreisverteilers eingebaut geliefert. Stromkreisverteiler, die auch als Unterverteiler bezeichnet werden, sind in unterschiedlichen Varianten erhältlich. Das Gehäuse kann unter Putz, auf Putz oder in einer Hohlwand montiert werden. In der Praxis ist es üblich, dass die elektrischen Komponenten und Normgeräte wie Sicherungsautomaten Schalter, Relais, Zähler und dergleichen von einer Elektrofachkraft auf dem Geräteträger, genauer gesagt auf der Profilschiene, platziert und anschließend verdrahtet werden. Neben elektrischen Komponenten können auch nicht elektrische Komponenten wie Abstandshalter oder ein Schlüsseltresor auf dem Geräteträger befestigt werden. Für unterschiedliche Einbaufälle steht eine Vielzahl unterschiedlich großer Gehäuse zur Verfügung, in denen jeweils ein daran angepasster Geräteträger oder einzelne Profilschienen montiert ist bzw. montiert werden kann bzw. können. Es ist selbstverständlich auch möglich, den Geräteträger in ein anderes Gehäuse, d.h. nicht in das Gehäuse eines Stromkreisverteilers, einzubauen oder ohne Gehäuse zu nutzen. Der Geräteträger kann beispielsweise in ein herkömmliches Metallgehäuse, ein Kunststoffgehäuse, ein Holzgehäuse eingebaut oder auf einer Montageplatte befestigt werden.

In der Praxis ist es auch üblich, dass zunächst lediglich das Gehäuse mit dem eingebauten Geräteträger im Rohbau des Gebäudes montiert wird, der Einbau der oben erwähnten elektrischen Komponenten und Normgeräte sowie deren Verdrahtung erfolgt dann zu einem späteren Zeitpunkt, um Beschädigungen, Verschmutzungen oder Diebstähle zu vermeiden. Nachdem derzeit für unterschiedliche Gehäuse auch unterschiedliche Geräteträger gefertigt werden, stellt dies beispielsweise für eine automatisierte effiziente Bestückung, Bezeichnung oder Verdrahtung große Probleme dar. Der Erfindung liegt daher die Aufgabe zugrunde, einen Geräteträger anzugeben, der für unterschiedliche Einbausituationen und in unterschiedlichen Gehäusen nutzbar ist.

Zur Lösung dieser Aufgabe ist bei einem Geräteträger der eingangs genannten Art erfindungsgemäß vorgesehen, dass jeder Verbindungssteg einen ersten Abschnitt aufweist, der von der Profilschiene in eine Richtung absteht, sowie einen zweiten Abschnitt, der von der Profilschiene in die entgegengesetzte Richtung absteht, wobei auf der Oberseite der ersten Abschnitte erste Rasteinrichtungen und auf der Unterseite der zweiten Abschnitte zweite Rasteinrichtungen angeordnet sind, wobei die ersten Rasteinrichtungen und die zweiten Rasteinrichtungen miteinander verrastbar sind.

Die Erfindung beruht auf der Erkenntnis, dass die bisher üblichen unterschiedlich großen und unterschiedlich geformten Geräteträger durch einen einzigen Geräteträger ersetzt werden können, der als Modul konzipiert ist. Mehrere Geräteträger können zu einem Geräteträgermodul verbunden werden. Dieses Verbinden der mehreren Geräteträger erfolgt durch Verrasten, d. h. Zusammenstecken, ohne dass dazu zwingend ein Werkzeug erforderlich ist.

Dadurch ergibt sich der Vorteil, dass mit einem einzigen Bauteil, dem Geräteträger, alle in der Praxis vorkommenden Anforderungen erfüllt werden können. Durch Zusammenstecken bzw. Aneinanderreihen können Geräteträgermodule mit mehreren Profilschienen gebildet werden. Dementsprechend können Geräteträgermodule mit z. B. zwei, drei oder vier Profilschienen hergestellt werden. Dies ist jedoch nicht als Einschränkung anzusehen, da Profilschienen endlos aneinandergereiht werden können. Jeder Geräteträger weist dazu seitliche Verbindungsstege auf, wobei auf deren Oberseite erste Abschnitte mit ersten Rasteinrichtungen vorhanden sind. Auf der Unterseite der Verbindungsstege sind zweite Abschnitte mit zweiten Rasteinrichtungen vorhanden, wobei die ersten Rasteinrichtungen und die zweiten Rasteinrichtungen miteinander verbindbar sind. Das bedeutet, dass die Oberseite eines Geräteträgers jeweils mit der Unterseite eines anderen Geräteträgers zusammengesteckt werden kann.

Vorzugsweise sind die ersten Rasteinrichtungen als Rastvorsprünge und die zweiten Rasteinrichtungen als Rastausnehmungen ausgebildet. Wesentlich ist dabei, dass zwei oder mehr Geräteträger zu einem Geräteträgermodul zusammengesteckt werden können.

Erfindungsgemäß kann es vorgesehen sein, dass die Rastvorsprünge senkrecht von der durch die Verbindungsstege und die Profilschiene gebildeten Ebene abstehen. Die Rastvorsprünge stehen nach oben von dem Verbindungssteg ab, auf die ein anderer Geräteträger mit den Rastausnehmungen seiner Verbindungsstege aufgesteckt werden kann.

Ein besonders sicherer Halt ergibt sich, wenn die Rastvorsprünge an ihren freien Enden von dem Verbindungssteg nach außen abstehende Endabschnitte aufweisen, die im montierten Zustand die Rastausnehmungen hintergreifen. Die Rastausnehmungen bzw. die nach außen abstehenden Endabschnitte sind elastisch, sodass ein selbsttätiges Lösen im zusammengesteckten Zustand verhindert wird. Die Rastvorsprünge können alternativ oder zusätzlich auch senkrecht abstehende Endabschnitte aufweisen, die zum Stapeln in entsprechende Ausnehmungen an der Unterseite eines anderen Geräteträgers einsetzbar sind.

Es liegt auch im Rahmen der Erfindung, dass in Längsrichtung der Profilschiene mehrere voneinander beabstandet angeordnete erste Rasteinrichtungen und mehrere voneinander beabstandet angeordnete zweite Rasteinrichtungen angeordnet sind. Die ersten und zweiten Rasteinrichtungen sind jeweils um den gleichen Betrag zueinander versetzt, sodass zwei Geräteträger in unterschiedlichen Relativpositionen zueinander zusammengesteckt werden können. Auf diese Weise kann der Abstand zwischen zwei Profilschienen in mehreren Stufen eingestellt werden. Eine Weiterbildung der Erfindung sieht vor, dass ein Geräteträger einen RFID-Tag und/oder eine optisch lesbare Codierung wie einen Data-Matrix-Code zum Speichern von dem Geräteträger zugeordneten individuellen Informationen aufweist. Informationen können auch mittels anderer Technologien elektronisch oder optisch auf dem Geräteträger gespeichert werden. Beispiele dafür sind NFC-Tags (Near-Field-Communication) oder ZigBee-Tags. Anhand der gespeicherten Informationen kann zum Beispiel die Bestückung eines Geräteträgers mit elektrischen oder nicht elektrischen Komponenten vorgenommen werden. Alternativ kann mittels der Informationen auch eine Zuordnung eines Geräteträgers zu einem bestimmten Gehäuse vorgenommen werden.

Der erfindungsgemäße Geräteträger kann auch Schraublöcher zum Befestigen des Geräteträgers in unterschiedlichen Gehäusen besitzen. Daneben kann der Geräteträger auch wenigstens eine Befestigungsöse zum Beispiel für Kabelbinder oder Abstandshalter aufweisen. Vorzugsweise weist ein Geräteträger zwei derartige Befestigungsösen auf.

Es wird bevorzugt, dass der erfindungsgemäße Geräteträger als einteiliges Spritzgussteil ausgebildet ist. Durch Spritzgießen kann der Geräteträger in großen Stückzahlen kostengünstig hergestellt werden. Eine Weiterbildung sieht dabei vor, dass der Geräteträger als hybrides Spritzgussteil ausgebildet ist und an einer oder beiden sich in Längsrichtung erstreckenden Außenkanten der Profilschiene durch ein Metallprofil verstärkt ist. Auf diese Weise kann die Profilschiene wie eine Hutschiene benutzt werden. Es ist auch möglich, dass das Metallprofil als vorzugsweise innenliegende Erdungsschiene benutzt wird.

Daneben betrifft die Erfindung ein Geräteträgermodul, das wenigstens zwei miteinander verrastete Geräteträger der beschriebenen Art umfasst.

Der erfindungsgemäße Geräteträger weist den Vorteil auf, dass er beliebig oft aneinander angereiht werden kann, um an unterschiedliche Anwendungen und Einbausituationen angepasst zu werden. Der Geräteträger ist ein Standard-Bauteil und mehrere Geräteträger lassen sich zu einem Geräteträgermodul zusammenstecken, sodass mit einem einzigen Bauteil alle Anforderungen erfüllt werden können. Dadurch wird auch die Automatisierung bei der Bestückung, Bezeichnung und Verdrahtung von Stromkreisverteilern extrem vereinfacht. Eine einfache Bereitstellung wird dadurch gewährleistet, dass der erfindungsgemäße Geräteträger stapelbar ist. Dementsprechend kann eine große Anzahl von Geräteträgern platzsparend gestapelt bereitgestellt werden, beispielsweise in einer Verpackung oder in einem Magazin. Mit einer automatischen Vorrichtung, insbesondere mit einem Greifer für einen Roboter, kann der Geräteträger gegriffen, an eine bestimmte Position bewegt, bestückt und beschriftet, mit einem oder mehreren Geräteträgern zusammengesteckt und anschließend verdrahtet und in einem Gehäuse montiert werden. Der erfindungsgemäße Geräteträger ermöglicht somit, dass eine durchgehende Prozesskette geschaffen wird, die eine flexible Herstellung bestückter Geräteträger bzw. mit Geräteträgern versehener und in Gehäuse eingebauter Stromkreisverteilungen ermöglicht. Es können sowohl identisch bestückte Geräteträger in großer Stückzahl als auch individuell konfigurierte Geräteträger bzw. Geräteträgermodule bestückt werden.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: ein Ausführungsbeispiel eines erfindungsgemäßen Geräteträgers in einer Draufsicht,
- Fig. 2: eine Ansicht des in Fig. 1 gezeigten Geräteträgers von hinten,
- Fig. 3: ein vergrößertes Detail des Geräteträgers im Bereich der Rasteinrichtungen,
- Fig. 4: eine Seitenansicht des erfindungsgemäßen Geräteträgers,
- Fig. 5: den in Fig. 4 gezeigten Geräteträger in einer perspektivischen Ansicht,
- Fig. 6: zwei zu einem Geräteträgermodul miteinander verrastete, mit elektrotechnischen Komponenten bestückte Geräteträger,
- Fig. 7: mehrere aufeinander gestapelte Geräteträger,
- Fig. 8: einen erfindungsgemäßen Geräteträger und eine Ansteckleiste, und
- Fig. 9: eine Seitenansicht des in Fig. 8 gezeigten Geräteträgers mit montierter Ansteckleiste.

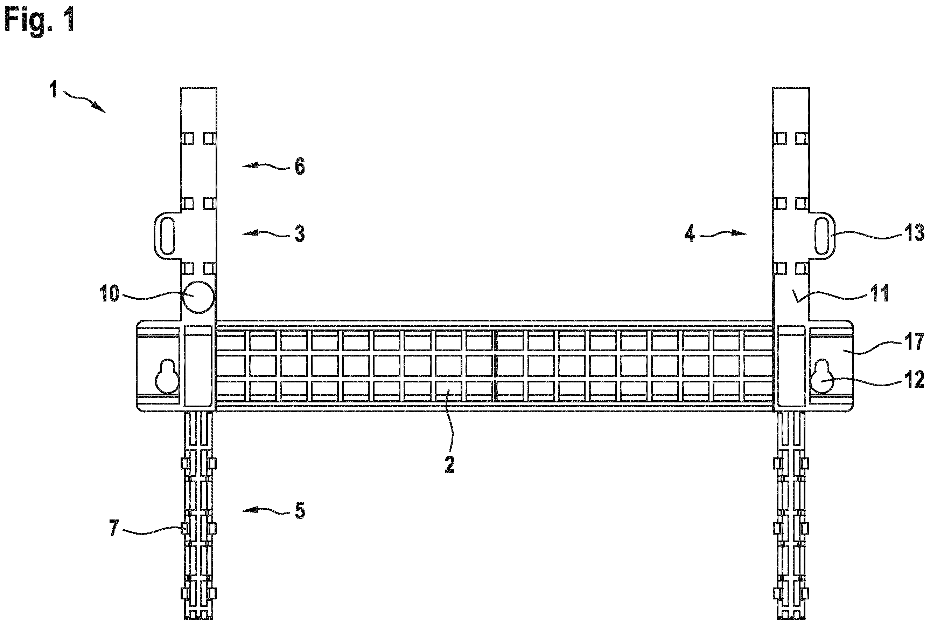

Der in den Fig. 1 bis 3 gezeigte Geräteträger 1 ist für den Einbau in ein Gehäuse eines Stromkreisverteilers vorgesehen. Derartige Stromkreisverteiler werden auch als Unterverteiler bezeichnet und sind Bestandteil der elektrischen Installation eines Gebäudes. Der Geräteträger 1 ermöglicht die Anbringung von elektrischen und nicht elektrischen Komponenten im Inneren eines Gehäuses, beispielsweise im Inneren eines Verteilerschranks.

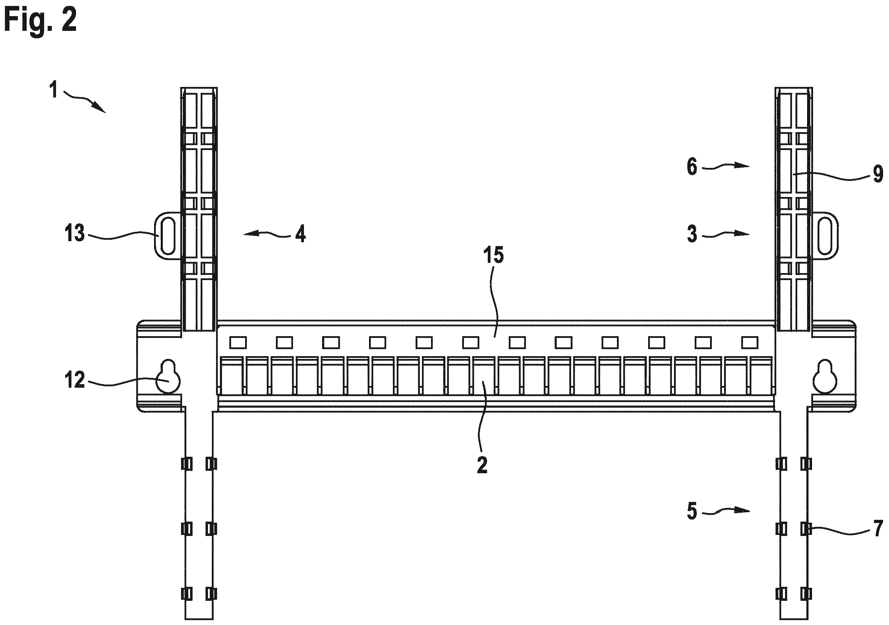

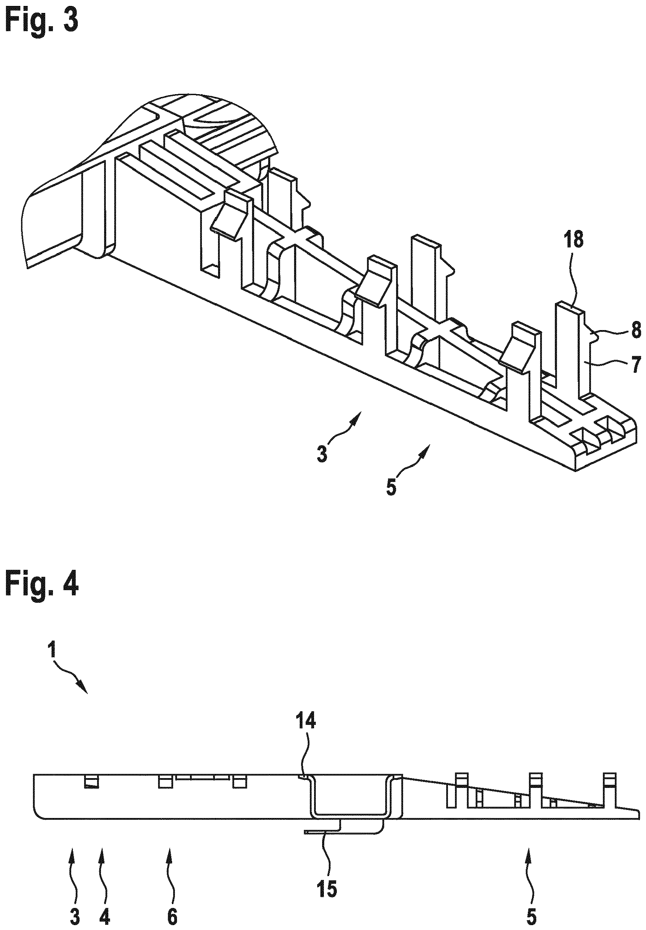

In den Fig. 1 und 2 erkennt man, dass der Geräteträger 1 eine Profilschiene 2 besitzt, die zum Anbringen der elektrischen Komponenten dient. Die Profilschiene 2 hat dieselbe Funktion wie eine Hutschiene und ermöglicht das Aufsetzen und Verrasten der elektrischen und nicht elektrischen Komponenten. Der Geräteträger 1 wird so in einem Gehäuse befestigt, dass die Profilschiene 2 horizontal angeordnet ist. In der Profilschiene 2 befinden sich an den Außenkanten zur Verstärkung dienende Metallprofile 14, die in Fig. 4 gezeigt sind und eine elektrisch leitende Verbindung von beispielsweise auf der Profilschiene montierten Erdungsklemmen gewährleisten.

An der linken und der rechten Seite der Profilschiene 2 ist jeweils ein Verbindungssteg 3, 4 angeordnet. Die Profilschiene 2 und die Verbindungsstege 3, 4 liegen näherungsweise in derselben Ebene. Beide Verbindungsstege 3, 4 verlaufen parallel zueinander und bilden mit der Profilschiene 2 einen rechten Winkel. Jeder Verbindungssteg 3, 4 weist einen ersten Abschnitt 5 auf, der sich von der Profilschiene 2 erstreckt. Der erste Abschnitt 5 erstreckt sich in der in den Fig. 1 und 2 gezeigten Ansicht nach unten. Daneben weist jeder Verbindungssteg 3, 4 einen zweiten Abschnitt 6 auf, der sich von der Profilschiene 1 in die entgegengesetzte Richtung erstreckt, in der in den Fig. 1 und 2 gezeigten Ansicht nach oben.

Auf der Oberseite der ersten Abschnitte 5 befinden sich erste Rasteinrichtungen, die als Rastvorsprünge 7 ausgebildet sind. Der erste Abschnitt 5 weist insgesamt drei Paare derartiger Rastvorsprünge 7 auf, die in Längsrichtung des ersten Abschnitts 5 voneinander beabstandet angeordnet sind.

In der vergrößerten Ansicht von Fig. 3 erkennt man, dass die Rastvorsprünge 7 an ihren freien Enden von dem ersten Abschnitt 5 des Verbindungsstegs 3 nach außen abstehende Endabschnitte 8 aufweisen. Die Rastvorsprünge 7 erstrecken sich senkrecht von der durch die Profilschiene 2 und die Verbindungsstege 3, 4 gebildeten Ebene nach oben.

In Fig. 2 erkennt man, dass sich auf der Unterseite der zweiten Abschnitte 6 zweite Rasteinrichtungen, die als Rastausnehmungen 9 ausgebildet sind, befinden. In Übereinstimmung mit der Anzahl der Anzahl der Rastvorsprünge 7 weist jeder zweite Abschnitt sechs paarweise angeordnete Rastausnehmungen 9 auf.

Die nach außen abstehenden Endabschnitte 8 der Rasteinrichtungen 7 weisen eine gewisse Elastizität auf, sodass sie in entsprechende Rastausnehmungen 9 einrastbar sind. Dementsprechend können die auf der Oberseite der ersten Abschnitte 5 ausgebildeten Rastvorsprünge 7 in die Rastausnehmungen 9, die auf der Unterseite der zweiten Abschnitte 6 ausgebildet sind, gesteckt und eingerastet werden. Im eingerasteten Zustand hintergreifen die elastischen, von den Rastvorsprüngen 7 nach außen abstehenden Endabschnitte 8 die eine Hinterschneidung aufweisenden Rastausnehmungen 9, wodurch ein zuverlässiger Halt gewährleistet und ein selbsttätiges Lösen verhindert wird.

Da drei voneinander beabstandete Reihen von Rastvorsprüngen 7 und ebenfalls drei voneinander beabstandete Reihen von Rastausnehmungen 9 vorhanden sind, können zwei Geräteträger 1 in unterschiedlichen Relativpositionen miteinander verrastet werden. Es bestehen somit drei verschiedene Möglichkeiten, zwei Geräteträger 1 miteinander zu einem Geräteträgermodul zu verbinden. Die miteinander verbundenen Geräteträger 1 können sich hinsichtlich des Abstands ihrer parallelen Profilschienen 2 voneinander unterscheiden. Dadurch ist es möglich, die Profilschienen 2 in unterschiedlichen Abständen voneinander anzuordnen, zum Beispiel, um eine Anpassung an unterschiedlich große elektrische oder nicht elektrische Komponenten zu ermöglichen.

Wieder Bezug nehmend auf Fig. 1 erkennt man, dass ein Verbindungssteg 3 einen RFID-Tag 10 aufweist, der zur Speicherung von Informationen dient. Der hier erwähnte RFID-Tag steht lediglich beispielhaft für optische oder elektronische Technologien, die die Speicherung und Auslesung von Informationen ermöglichen. Bei den Informationen kann es sich um eine eindeutige Kennung des jeweiligen Geräteträgers 1 handeln. Anhand des RFID-Tags 10 kann der Geräteträger 1 identifiziert und durch eine automatische Montagevorrichtung bestückt werden. Anhand der mit dem individuellen RFID-Tag 10 verknüpften Informationen kann beispielsweise ein Bestückungsplan für den Geräteträger 1 abgerufen werden. Der Geräteträger 1 kann anschließend durch eine automatische Montagevorrichtung wie einen Roboter gemäß dem Bestückungsplan mit unterschiedlichen elektrischen oder nicht elektrischen Komponenten bestückt werden. Optional können die elektrischen Komponenten nach der Bestückung des Geräteträgers 1 auch automatisch verdrahtet werden.

Der in Fig. 1 rechte Verbindungssteg 4 weist eine Fläche 11 auf, auf der eine optisch lesbare Codierung anbringbar ist. Dabei kann es sich um einen Data-Matrix-Code handeln. Die mittels der Kodierung gespeicherten Informationen sind dem jeweiligen Geräteträger 1 individuell zugeordnet. In ähnlicher Weise kann die Profilschiene 2 auf der in Fig. 1 gezeigten Vorderseite oder auf der in Fig. 2 gezeigten Rückseite weitere Flächen zum Aufbringen von Informationen aufweisen. Die Informationen können durch ein Druckverfahren oder mittels Laserstrahlen aufgebracht werden. Alternativ kann ein mit Informationen bedruckter Aufkleber angebracht werden. Zusätzlich kann ein Beschriftungsfeld zur manuellen Beschriftung vorgesehen sein. Anhand der auf der Fläche aufgebrachten Informationen ist eine individuelle Identifizierung eines bestimmten Geräteträgers möglich. Dadurch besteht die Möglichkeit, zu einem späteren Zeitpunkt die Herstellungsschritte nachzuvollziehen, insbesondere kann zurückverfolgt werden, welche elektrischen Komponenten verbaut worden sind.

Die Profilschiene 2 des Geräteträgers 1 weist im Bereich ihrer freien Enden jeweils Durchgangsöffnungen 12 auf, die aus zwei miteinander verbundenen Kreisen bestehen, wobei der obere Kreis einen kleineren Durchmesser als der untere Kreis aufweist.. Diese Durchgangsöffnungen 12 ermöglichen die Verschraubung des Geräteträgers 1 in einem Gehäuse. Daneben weist jeder Verbindungssteg 3, 4 eine Befestigungsöse 13 auf, durch die Kabelbinder zur Befestigung von Leitungen des Stromkreisverteilers geführt werden können. Durch die Befestigungsöse 13 kann auch ein zusätzliches Formteil eingesetzt werden, beispielsweise zur Befestigung oder Stabilisierung einer Abdeckung. Die außenliegenden, abstehenden Endabschnitte 17 an beiden Seiten der Profilschiene 2 sind so ausgebildet, dass diese fest und formschlüssig von einen Greifer gegriffen, verfahren oder um 360 Grad gedreht werden können.

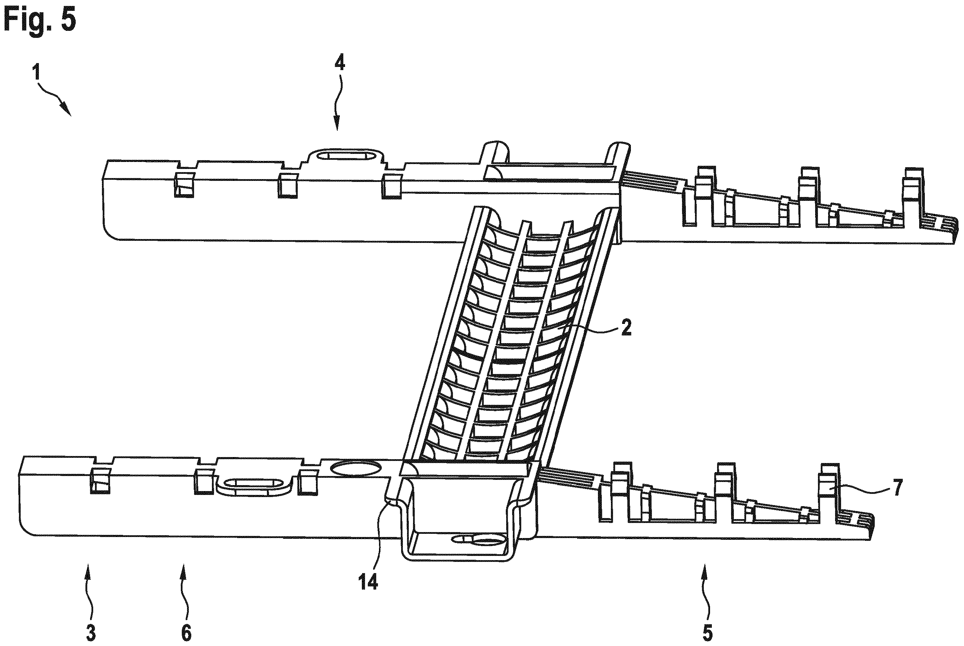

Fig. 4 ist eine Seitenansicht des Geräteträgers 1, Fig. 5 ist eine ähnliche, leicht perspektivische Ansicht des Geräteträgers 1. In Fig. 4 und Fig. 5 erkennt man, dass die Höhe des ersten Abschnitts 5 der Verbindungsstege 3, 4 zum freien Ende hin abnimmt.

Der Geräteträger 1 ist als einteiliges Spritzgussteil ausgebildet. In der Profilschiene 2 befinden sich an den Außenkanten die zur Verstärkung dienenden Metallprofile 14, die auch zur elektrisch leitenden Übertragung bzw. Kontaktierung dienen.

In der Seitenansicht von Fig. 4 erkennt man, dass an der Unterseite der Profilschiene 2 eine Rastnase 15 angeformt ist, die als Halterung für weitere ansteckbare Bauteile dient. Ein Beispiel für ein derartiges ansteckbares Bauteil ist eine Sammelschiene (bus bar). Die Rastnase 15 kann auch zum Aufrasten einer elektrisch leitenden Sammelschiene oder einer Kommunikationsschiene zur Energieübertragung oder Vernetzung von auf der Profilschiene 2 aufgesetzten Normgeräten dienen.

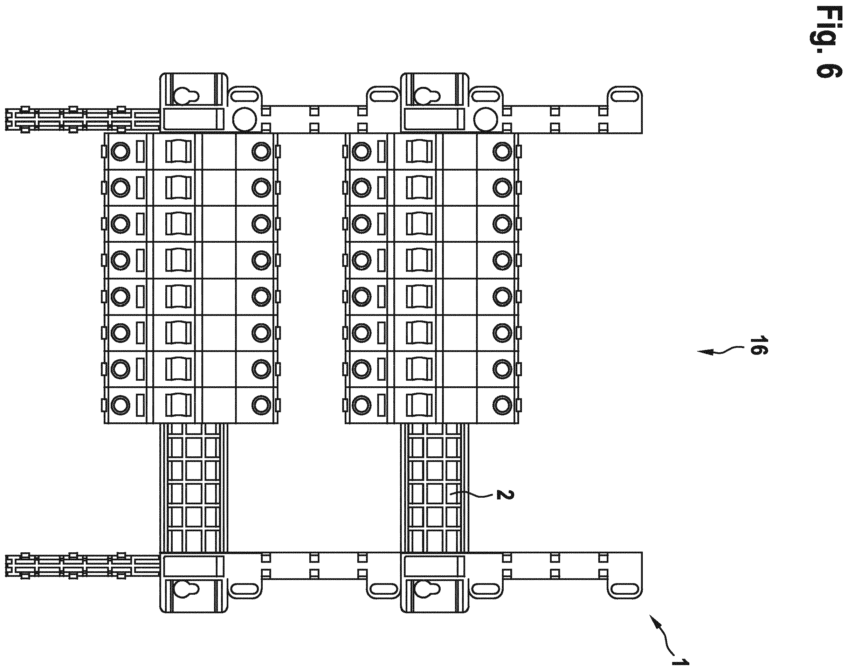

Fig. 6 zeigt schließlich ein Geräteträgermodul 16, das aus zwei miteinander verbundenen Geräteträgern 1 zusammengesetzt ist. Dabei erkennt man, dass die beiden parallelen Profilschienen 2 den maximal möglichen Abstand voneinander aufweisen. Im Rahmen einer automatischen Montage kann das Geräteträgermodul 16 mit den jeweils benötigten elektrischen oder nicht elektrischen Komponenten wie Sicherungsautomaten, Relais, Schaltern usw. bestückt werden. Anschließend können die elektrischen Komponenten manuell oder ebenfalls automatisch verdrahtet werden. In diesem vormontierten Zustand kann das vollständige Geräteträgermodul 16 in ein Gehäuse eingebaut werden.

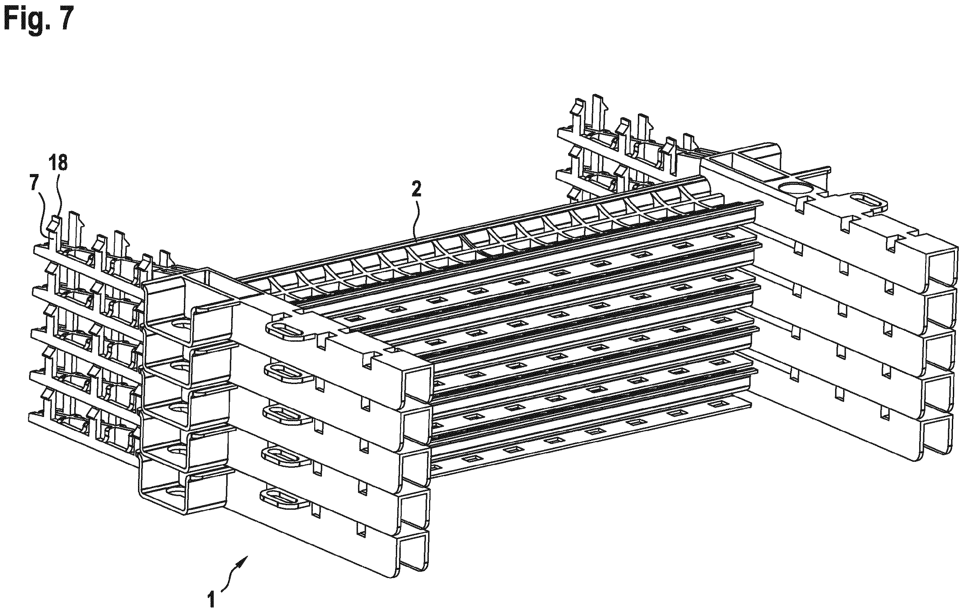

Fig. 7 ist eine perspektivische Ansicht und zeigt mehrere gestapelte Geräteträger 1. Um eine prozesssichere Stapelung und damit eine saubere Entnahme beispielsweise durch einen Greifer einer Automatisierung zu gewährleisten, weisen die in Fig. 3 dargestellten Rastvorsprünge 7 Endabschnitte 18 auf, die es ermöglichen, mehrere Geräteträger 1 aufeinander zu stapeln. Die elastischen Endabschnitte 18 eines Geräteträgers 1 greifen dabei in entsprechende Ausnehmungen des benachbarten oberen Geräteträgers 1 ein. Diese Ausnehmungen sind in der in Fig. 2 gezeigten rückseitigen Ansicht des Geräteträgers 1 erkennbar.

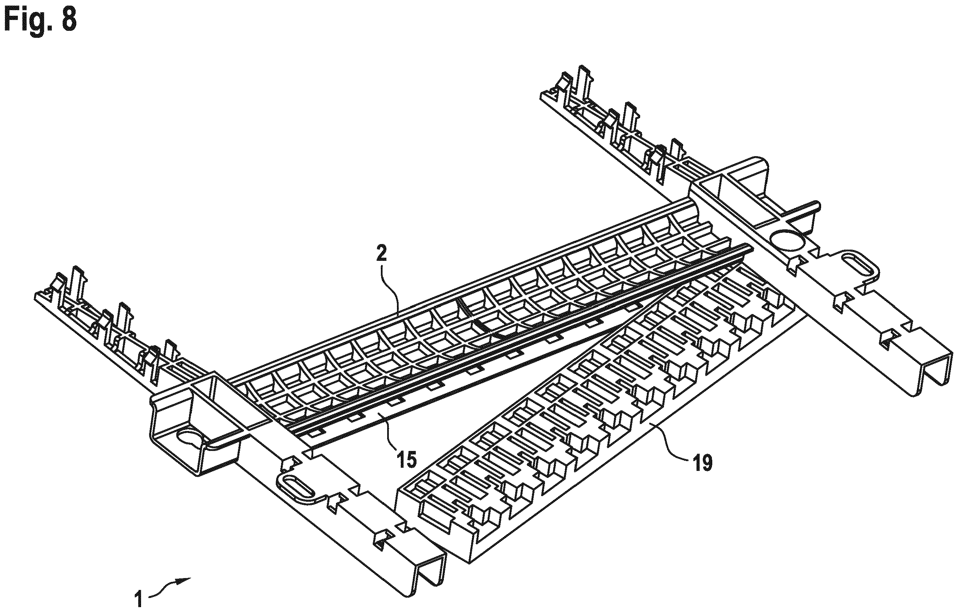

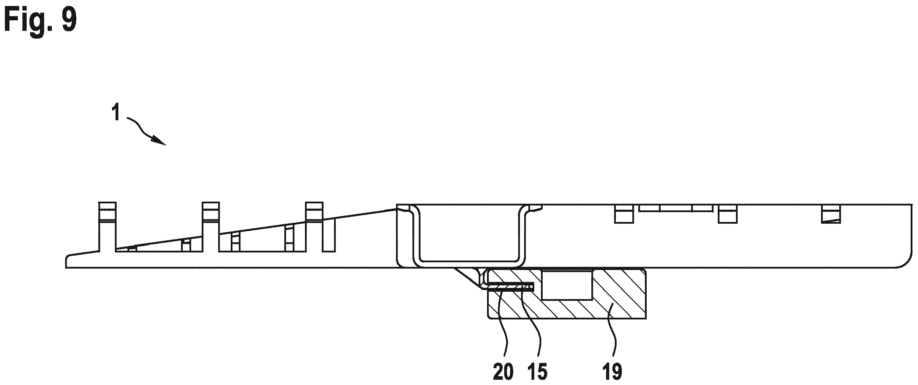

Die Fig. 8 und 9 zeigen einen Geräteträger 1 und eine Ansteckleiste 19, wobei Fig. 8 eine perspektivische Ansicht und Fig. 9 eine Seitenansicht ist. Der Begriff "Ansteckleiste" wird hier als Oberbegriff für eine Bus-bar oder eine Kommunikationsschiene zur Energieübertragung, zur Datenübertragung oder zur Vernetzung benutzt. Es kann sich jedoch auch um eine Leiste für zusätzliche Beschriftungen oder Bezeichnungen handeln.

Wie bereits zuvor erläutert wurde, weist die Profilschiene 2 an ihrer Unterseite die Rastnase 15 auf, die sich über die gesamte Länge der Profilschiene 2 parallel zu deren Unterseite erstreckt. Die Rastnase 15 dient zum Aufstecken der Ansteckleiste 19. In der Seitenansicht von Fig. 9 erkennt man, dass die Ansteckleiste 19 eine Nut 20 aufweist. Durch die Nut 20 ist die Ansteckleiste 19 auf die Rastnase 15 aufschiebbar und mit ihr verrastbar. Die Ansteckleiste 19 kann je nach der beabsichtigten Anwendung als Bus-bar oder Kommunikationsschiene zur Energieübertragung, zur Datenübertragung oder zur Vernetzung ausgebildet sein. Die Ansteckleiste kann auch eine Beschriftungsschiene sein.

## Patentansprüche

1. Geräteträger (1), der für den Einbau in ein Gehäuse eines Stromkreisverteilers vorgesehen ist, mit zwei zueinander beabstandeten, in dem Gehäuse befestigbaren Verbindungsstegen (3, 4) und einer sich orthogonal dazu erstreckenden Profilschiene (2) zum Befestigen elektrischer Komponenten, **dadurch gekennzeichnet, dass** jeder Verbindungssteg (3, 4) einen ersten Abschnitt (5) aufweist, der von der Profilschiene (2) in eine Richtung absteht, sowie einen zweiten Abschnitt (6), der von der Profilschiene (2) in die entgegengesetzte Richtung absteht, wobei auf der Oberseite der ersten Abschnitte (5) erste Rasteinrichtungen und auf der Unterseite der zweiten Abschnitte (6) zweite Rasteinrichtungen angeordnet sind, wobei die ersten Rasteinrichtungen und die zweiten Rasteinrichtungen miteinander verrastbar sind.

2. Geräteträger nach Anspruch 1, wobei die ersten Rasteinrichtungen als Rastvorsprünge (7) und die zweiten Rasteinrichtungen als Rastausnehmungen (9) ausgebildet sind.

3. Geräteträger nach Anspruch 2, wobei die Rastvorsprünge (7) senkrecht von der durch die Verbindungsstege (3, 4) und der Profilschiene (2) gebildeten Ebene abstehen.

4. Geräteträger nach Anspruch 2 oder 3, wobei die Rastvorsprünge (7) an ihren freien Enden von der Profilschiene (2) nach außen abstehende Endabschnitte (8) aufweisen, die im montierten Zustand die Rastausnehmungen (9) hintergreifen und/oder senkrecht abstehende Endabschnitte (18), die zum Stapeln in entsprechende Ausnehmungen an der Unterseite eines anderen Geräteträgers (1) einsetzbar sind.

5. Geräteträger nach einem der vorangehenden Ansprüche, wobei in Längsrichtung der Profilschienen (2) mehrere voneinander beabstandet angeordnete erste Rasteinrichtungen und mehrere voneinander beabstandet angeordnete zweite Rasteinrichtungen angeordnet sind.

6. Geräteträger nach einem der vorangehenden Ansprüche, der eine elektronische Codierung wie einen RFID-Tag (10), einen NFC-Tag oder einen ZigBee-Tag und/oder eine optisch lesbare Codierung wie einen Data-Matrix-Code zum Speichern von dem Geräteträger (1) zugeordneten individuellen Informationen aufweist.

7. Geräteträger nach einem der vorangehenden Ansprüche, der Schraublöcher zum Befestigen des Geräteträgers (1) in einem Gehäuse aufweist.

8. Geräteträger nach einem der vorangehenden Ansprüche, der wenigstens eine Befestigungsöse (13) für Kabelbinder oder Abstandshalter aufweist.

9. Geräteträger nach einem der vorangehenden Ansprüche, wobei er als einteiliges Spritzgussteil ausgebildet ist.

10. Geräteträger nach Anspruch 9, wobei die Profilschiene (2) als hybrides Spritzgussteil ausgebildet ist und an einer oder beiden sich in Längsrichtung erstreckenden Außenkanten durch ein Metallprofil (14) verstärkt ist.

11. Geräteträger nach einem der vorangehenden Ansprüche, wobei die Profilschiene (2) an der Unterseite eine Rastnase (15) zum Aufstecken einer Ansteckleiste aufweist.

12. Geräteträgermodul (16), umfassend wenigstens zwei Geräteträger (1) nach einem der vorangehenden Ansprüche, die miteinander verrastet sind.
